# FASCICULE DE BREVET EUROPEEN

(11) **EP 2 004 485 B1**
(45) Date de publication et mention de la délivrance du brevet: **14.09.2011**
(21) Numéro de dépôt: 07712464.2
(22) Date de dépôt: 07.03.2007
(51) Int. Cl.: B64D 13/06

(54) **DISPOSITIF ET PROCEDE DE GENERATION ELECTRIQUE DE SECOURS À BORD D'UN AERONEF**
VORRICHTUNG UND VERFAHREN ZUR ERZEUGUNG EINER NOTSTROMVERSORGUNG AN BORD EINES FLUGZEUGS
DEVICE AND METHOD FOR GENERATING A BACK-UP ELECTRICITY SUPPLY ON BOARD AN AIRCRAFT

(30) Priorité: 04.04.2006 FR 0651186
(43) Date de publication de la demande: 24.12.2008
(73) Titulaire: AIRBUS OPERATIONS, 31060 Toulouse (FR)
(72) Inventeur: FOCH, Etienne, F-31000 Toulouse (FR); LANGLOIS, Olivier, F-31770 Colomiers (FR)
(74) Mandataire: Ilgart, Jean-Christophe
(86) Numéro de dépôt international: PCT/EP2007/052140
(87) Numéro de publication internationale: WO 2007/113070

(56) Documents cités:
- WO-A-99/41146
- US-A- 3 878 692
- US-A- 4 645 940
- US-A- 5 850 113
- US-A- 5 899 085
- US-A- 5 929 537
- US-A1- 2002 113 167
- US-A1- 2006 061 213
- US-B1- 6 776 002
- US-B1- 6 948 331

## Description

### DOMAINE TECHNIQUE

L'invention concerne un dispositif et un procédé de génération électrique de secours à bord d'un aéronef, par exemple un avion.

### ÉTAT DE LA TECHNIQUE ANTÉRIEURE

Après l'avion « plus électrique », l'avion «tout électrique» implique de nombreux changements par rapport aux avions actuels. Ainsi, la suppression du prélèvement d'air sur les moteurs (« bleed »), qui est utilisé, entre autre, de manière à réaliser le conditionnement d'air du cockpit et de la cabine, est un changement important. Cette suppression implique la nécessité d'effectuer un tel conditionnement d'air du cockpit et de la cabine à partir de l'électricité disponible à bord, en suivant la philosophie d'un avion plus électrique.

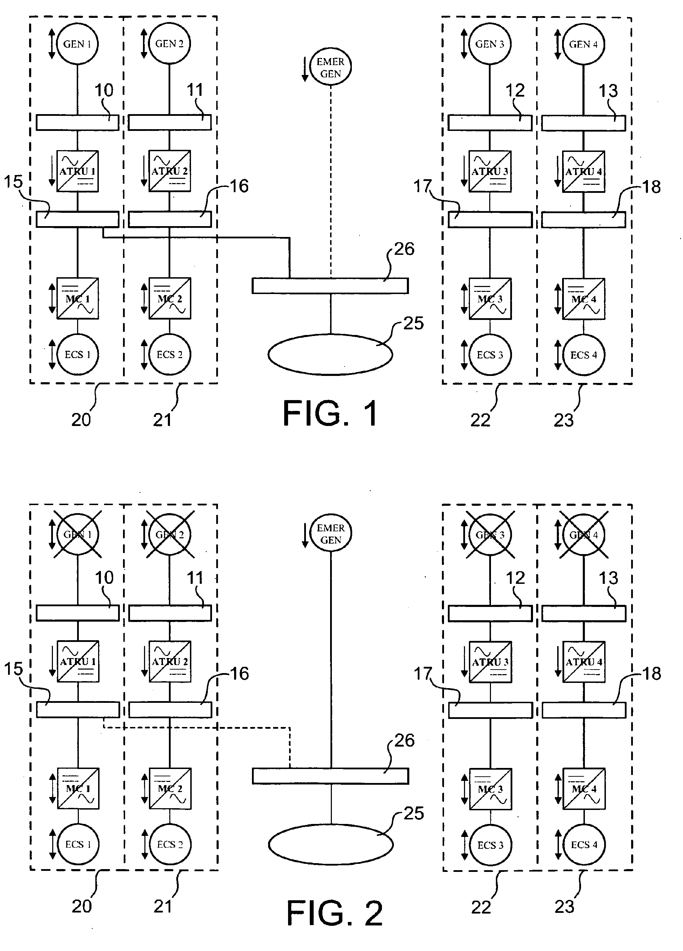

Pour réaliser ce conditionnement d'air, qui requière une puissance électrique très élevée, de l'ordre de celle actuellement disponible sur les avions de transports civils, on peut utiliser quatre moteurs distincts pour entraîner des compresseurs d'air (voir le document US2006061213), Une architecture simplifiée d'un réseau électrique d'avion tout électrique avec un dispositif électrique de secours traditionnel est illustrée sur la figure 1.

Cette architecture possède une génération électrique principale en courant alternatif (AC) triphasé (par exemple 230/400 volts AC) et une distribution mixte avec une haute tension continue (par exemple +/- 270 volts DC).

Dans cette architecture la génération électrique principale est réalisée par quatre générateurs GEN1, GEN2, GEN3 et GEN4 alimentant chacun une barre bus de distribution électrique triphasée 230 volts AC, ces barres étant référencées 10, 11, 12, 13.

La génération continue (DC) haute tension +/- 270 volts DC (barres bus référencées 15, 16, 17, 18) est obtenue par redressement de la tension alternative précédente, par exemple à partir d'unités autotransformateurs-redresseurs ATRU1, ATRU2, ATRU3 et ATRU4.

Les groupes du système de conditionnement d'air ECS1, ECS2, ECS3, ECS4 sont alimentés en haute tension continue via des onduleurs de tensions MC1, MC2, MC3 et MC4.

Ce réseau électrique avion comporte ainsi quatre zones 20, 21, 22 et 23 totalement ségréguées, ce qui permet d'améliorer la disponibilité de l'électricité à bord de l'avion en cas de panne.

La partie « essentielle » du réseau (charges essentielles 25) est connectée à une barre bus haute tension continue +/- 270 volts DC « essentielle » 26. Comme illustré sur la figure 1, cette barre bus 26 est normalement alimentée par la barre bus haute tension 15.

Comme illustré sur la figure 2, en cas de perte de l'ensemble de la génération électrique principale (GEN1, GEN2, GEN3, GEN4), un générateur de secours EMER GEN permet d'alimenter cette barre bus essentielle 26. Dans ce cas seules les charges essentielles 25 du réseau sont alimentées.

Ce générateur de secours EMER GEN peut être une turbine éolienne se déployant sous l'avion (RAT ou « Ram Air Turbine »). Dans un avion « plus électrique » ou « tout électrique », cette turbine peut entraîner un générateur électrique, et ainsi alimenter les charges essentielles du réseau en secours.

D'autres générateurs de même type sont également envisageables : par exemple les turbines type APU (« Auxiliary Power Unit ») fonctionnant au kérosène ou à l'hydrazine, les piles à combustibles, etc.

L'utilisation d'un générateur de secours de type turbine éolienne présente plusieurs inconvénients. Sa masse et son volume ne sont pas négligeables. Son installation dans l'avion est contraignante, car elle doit être placée en un endroit stratégique lui permettant d'être correctement exposée à l'air : ses performances en dépendent. Un mauvais positionnement entraînerait des dimensions et une masse supérieure pour obtenir une même production d'électricité. Des inconvénients similaires existent aussi dans le cadre de l'utilisation d'un quelconque autre générateur de secours (APU, pile à combustible, etc.).

Il existe une première période transitoire pendant laquelle le dispositif électrique de secours est inopérant : depuis l'instant de perte de l'ensemble de la génération électrique principale jusqu'au démarrage effectif du générateur de secours EMER GEN.

En effet, le temps de démarrage d'un générateur de secours EMER GEN est relativement long. Il peut excéder plusieurs secondes. Pendant cette période transitoire entre l'instant où intervient la perte de la génération principale et le démarrage de ce générateur de secours, les charges essentielles ne sont pas alimentées, ce qui n'est pas acceptable.

Dans le cas d'une turbine éolienne, une seconde période transitoire peut être observée lors de l'atterrissage. En effet, une telle turbine est inefficace à basse vitesse, après l'atterrissage. Or, le freinage des roues de l'avion requière une énergie électrique conséquente, qu'il est impératif de fournir.

L'invention a pour objet de résoudre les problèmes techniques liés à l'utilisation d'une turbine éolienne comme source d'énergie de secours, et à l'existence de telles périodes transitoires.

Le brevet US 5,899,085 décrit un système d'alimentation et de conditionnement d'air à bord d'un avion, qui comprend une turbine connectée à un moteur de l'avion pour recevoir de l'air d'appoint et/ou de l'air sous pression dynamique pour commander cette turbine, un générateur étant connecté à cette turbine.

### EXPOSÉ DE L'INVENTION

L'invention concerne un dispositif électrique à bord d'un aéronef, par exemple un avion, comprenant plusieurs générateurs alimentant chacun une barre bus de distribution électrique triphasée, des barres bus haute tension continu reliée chacune à l'une des barres bus de distribution électrique triphasée par l'intermédiaire d'une unité de redressement, plusieurs groupes de conditionnement d'air ayant une arrivée d'air extérieure reliés chacun à un convertisseur statique, une barre bus haute tension continu essentielle reliée à plusieurs charges, caractérisé en ce qu'il comprend des moyens de connexion des groupes de conditionnement d'air permettant de connecter chacun d'eux:
- en fonctionnement normal, à l'une des barres bus haute tension continu au travers d'un convertisseur statique utilisé en onduleur, ou
- en fonctionnement secours, à la barre bus essentielle au travers d'un convertisseur statique utilisé en redresseur,
   et un dispositif de stockage d'électricité relié à la barre bus haute tension continu essentielle.

Avantageusement il comprend la barre bus haute tension continu essentielle, sur laquelle sont connectées des charges essentielles de l'aéronef et le dispositif de stockage, et des moyens de connexion de convertisseurs statiques, qui sont reliés aux groupes de conditionnement d'air, à la barre bus essentielle. Ce dispositif de stockage peut comprendre plusieurs dispositifs : batteries d'accumulateurs, supercondensateurs, accumulateurs cinétiques (roues à inertie), etc. Avantageusement le dispositif de stockage comprend deux sous-systèmes distincts : un pour le +270 volts DC et un pour le -270 volts DC. Avantageusement le dispositif de stockage utilise un stockage électrochimique par batteries d'accumulateurs ou supercondensateurs, et comprend deux sous-ensembles de stockage et deux convertisseurs statiques DC/DC. Avantageusement le dispositif de stockage comprend une fonction de filtrage actif.

L'invention concerne également un procédé de génération électrique à bord d'un aéronef, par exemple un avion, comprenant plusieurs générateurs alimentant chacun une barre bus de distribution électrique triphasée, des barres bus haute tension continu reliée chacune à l'une des barres bus de distribution électrique triphasée par l'intermédiaire d'une unité de redressement, plusieurs groupes de conditionnement d'air ayant une arrivée d'air extérieure reliés chacun à un convertisseur statique, une barre bus haute tension continu essentielle reliée à plusieurs charges, caractérisé en ce qu'il comprend les étapes suivantes :
- en fonctionnement normal, on alimente chaque groupe de conditionnement d'air en haute tension continue en le connectant à l'une des barres bus haute tension continu au travers d'un convertisseur statique utilisé en onduleur,
- en fonctionnement secours, on utilise chaque groupe de conditionnement d'air en générateur de secours en le reliant à la barre bus essentielle au travers d'un convertisseur statique utilisé en redresseur,
- pendant les périodes transitoires entre le fonctionnement normal et le fonctionnement secours et lors de l'atterrissage de l'aéronef, on assure la fourniture d'électricité à l'aide d'un dispositif de stockage relié à la barre bus essentielle.

Avantageusement en fonctionnement normal on alimente les groupes de conditionnement d'air via des convertisseurs statiques utilisés en onduleurs, et dans lequel en fonctionnement secours on utilise les groupes de conditionnement d'air pour alimenter une barre bus essentielle, sur laquelle sont connectées les charges essentielles de l'aéronef et le dispositif de stockage, via les convertisseurs statiques utilisés en redresseurs.

L'invention concerne un aéronef comprenant le dispositif tel que défini ci-dessus, et aussi un aéronef comprenant un dispositif susceptible de mettre en oeuvre le procédé tel que défini ci-dessus.

L'invention présente de nombreux avantages, et notamment les avantages suivants :
- L'exploitation de la réversibilité en puissance des groupes de conditionnement d'air, et plus particulièrement des compresseurs d'air, permet d'utiliser ceux-ci en tant que générateur de secours. Leurs puissances élevées permettent d'envisager la suppression de tout autre générateur de type RAT, APU, pile à combustible, etc. Le gain en encombrement et en masse est intéressant.
- La mise en place d'un dispositif de stockage permet d'assurer la disponibilité du réseau électrique pendant les périodes transitoires d'inactivité du générateur de secours. Cette fonction est particulièrement utile dans les instants qui suivent une panne totale de génération principale, et lors de l'atterrissage de l'avion.
- L'association du dispositif de stockage aux groupes de conditionnement d'air permet diverses stratégies de commande. Des reconfigurations des commandes de chaque générateur de secours permettent une bonne gestion de la disponibilité et de la qualité de tension sur le réseau. En outre, le dispositif de stockage peut être utilisé hors mode secours en filtre actif pour améliorer la qualité de tension du réseau.

- L'utilisation des groupes de conditionnement d'air permet de réduire la période transitoire intervenant après la panne de la génération électrique. En effet, ces groupes étant déjà en service avant que la panne intervienne, leurs vitesses de rotation sont déjà élevées. Le basculement de ces groupes du mode moteur (en normal) au mode générateur (en secours) est donc quasiment instantané. Ce n'est pas le cas pour des générateurs de secours, tels qu'une turbine éolienne, un APU, une pile à combustible, etc... qui doivent être démarrés.

### BRÈVE DESCRIPTION DES DESSINS

Les figures 1 et 2 illustrent un dispositif de génération électrique de secours de l'art connu à bord d'un aéronef, respectivement en fonctionnement normal et en fonctionnement secours.
Les figures 3 et 4 illustrent le dispositif de génération électrique de secours de l'invention à bord d'un aéronef, respectivement en fonctionnement normal et en fonctionnement secours.

### EXPOSÉ DÉTAILLÉ DE MODES DE RÉALISATION PARTICULIERS

Le dispositif de générateur électrique de secours de l'invention propose une architecture du réseau électrique dans lequel les groupes du système de conditionnement d'air ECS1, ECS2, ECS3 et ECS4 illustrés sur les figures 1 et 2 sont utilisés comme générateurs de secours électrique.

En effet, d'une manière simplifiée, les groupes de conditionnement d'air compriment de l'air en provenance de l'extérieur de l'avion. Dans chaque groupe un compresseur d'air est entraîné par une machine tournante électrique alimentée par un convertisseur statique MC utilisé en onduleur. Ce compresseur est réversible en puissance, c'est à dire qu'il est possible d'entraîner son arbre mécanique en rotation en injectant de l'air sur sa turbine. La machine tournante électrique ainsi que le convertisseur MC sont également réversibles en puissance. Selon l'invention chacun des groupes de conditionnement d'air, utilisé comme générateur de secours électrique, fournit de l'électricité sur le réseau, tant que l'avion a une vitesse suffisante.

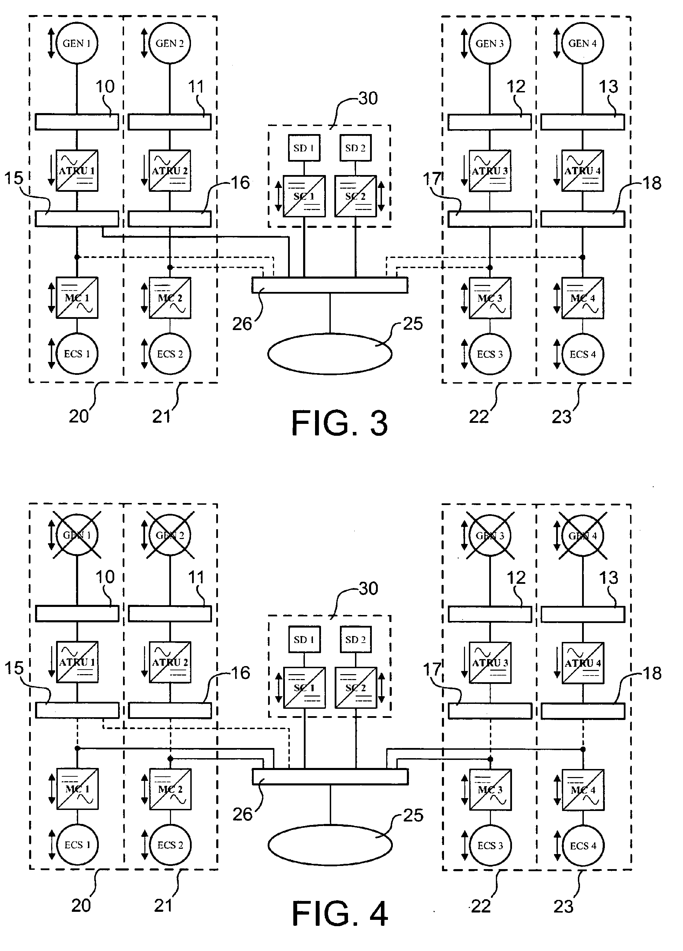

La figure 3 illustre ainsi une architecture simplifiée d'un réseau électrique d'avion tout électrique avec génération électrique de secours par ces groupes de conditionnement d'air ECS1, ECS2, ECS3 et ECS4, les éléments déjà utilisés sur les figures 1 et 2 gardant les mêmes références.

Comme illustré sur cette figure 3, en fonctionnement normal, les groupes de conditionnement d'air ECS1, ECS2, ECS3 et ECS4 sont alimentés à partir des barres bus 15, 16, 17 et 18.

Comme illustré sur la figure 4, en fonctionnement secours, les groupes de conditionnement d'air ECS1, ECS2, ECS3 et ECS4 sont utilisés en générateur de secours. Les convertisseurs statiques MC1, MC2, MC3 et MC4 sont déconnectés de leurs barres bus d'origine 15, 16, 17 et 18. Ces convertisseurs sont alors couplés sur la barre bus essentielle +/- 270 volts DC 26. Ces convertisseurs sont alors utilisés en redresseurs et non plus en onduleurs.

Même si le rendement des groupes ECS1, ECS2, ECS3 et ECS4 est plus faible en mode secours qu'en mode moteur utilisé pour la fonction compression d'air, il est possible, du fait de la forte puissance nominale de chaque groupe ECS1, ECS2, ECS3 et ECS4, d'en extraire une puissance conséquente.

Comme illustré sur ces figures 3 et 4, au moment du basculement du mode normal vers le mode secours, la très courte période transitoire nécessaire au basculement des groupes ECS1, ECS2, ECS3 et ECS4 du mode moteur vers le mode générateur peut être assurée par un dispositif de stockage 30. Ce système de stockage, pendant l'atterrissage de l'avion, permet d'assurer la fourniture d'électricité nécessaire au freinage de celui-ci. En effet, la vitesse de l'avion est alors trop faible pour obtenir une puissance suffisante des groupes ECS1, ECS2, ECS3 et ECS4.

Avantageusement ce dispositif de stockage 30 se compose de deux sous-systèmes de stockage distincts un pour le + 270 volts DC et un pour le - 270 volts DC. Ces sous-systèmes sont couplés directement sur la barre bus essentielle 26. Dans le cas d'un stockage électrochimique par batteries d'accumulateurs ou de supercondensateurs, ce dispositif de stockage 30 comprend deux sous-ensembles de stockage SD1 et SD2 et de deux convertisseurs statiques SC1 et SC2.

Ce dispositif de stockage 30 est couplé en permanence sur le réseau électrique, même en fonctionnement normal. Cela permet de le maintenir chargé. Il est ainsi prêt à intervenir en cas de panne de génération principale.

Une fonction intéressante de ce dispositif de stockage 30 est la possibilité d'absorber une puissance rejetée par une charge réversible du réseau. Une fonction de filtrage actif peut être également ajoutée à ce dispositif de stockage 30, en vue d'améliorer la qualité de tension en mode normal.

La figure 4 illustre l'architecture du réseau électrique en cas de fonctionnement en secours avec les groupes ECS1, ECS2, ECS3 et ECS4. Une stratégie de gestion possible de ces différents groupes consiste à confier la régulation de tension réseau aux sous-ensembles de stockage SD1 et SD2. Les groupes ECS1, ECS2, ECS3 et ECS4 sont alors commandés de manière à fournir le courant demandé par les charges essentielles 25. De cette manière, les sous-ensembles de stockage SD1 et SD2 permettent de conserver une bonne qualité de tension sur le réseau électrique. De plus ils sont ainsi opérationnels instantanément lorsque les groupes ECS1, ECS2, ECS3 et ECS4 ne sont plus aptes à fournir une puissance importante lors de l'atterrissage.

## Revendications

1. Dispositif de génération électrique à bord d'un aéronef comprenant plusieurs générateurs (GEN1-GEN4) alimentant chacun une barre bus de distribution électrique triphasée (10, 11, 12, 13), des barres bus haute tension continu (15, 16, 17, 18) reliée chacune à l'une des barres bus de distribution électrique triphasée par l'intermédiaire d'une unité de redressement (ATRu1-ATRu4), plusieurs groupes de conditionnement d'air (ECS1-ECS4) ayant une arrivée d'air extérieure reliés chacun à un convertisseur statique (MC1-MC4), une barre bus haute tension continu essentielle (26) reliée à plusieurs charges (25), **caractérisé en ce qu'**il comprend des moyens de connexion des groupes de conditionnement d'air (ECS1-ECS4) permettant de connecter chacun d'eux :
- en fonctionnement normal, à l'une des barres bus haute tension continu (15, 16, 17, 18) au travers d'un convertisseur statique (MC1-MC4) utilisé en onduleur, ou
- en fonctionnement secours, à la barre bus essentielle (26) au travers d'un convertisseur statique (MC1-MC4) utilisé en redresseur,
et un dispositif de stockage d'électricité (30) relié à la barre bus haute tension continu essentielle (26).

2. Dispositif selon la revendication 1, qui comprend la barre bus haute tension continu essentielle (26) sur laquelle sont connectées des charges essentielles (25) de l'aéronef et le dispositif de stockage (30),et des moyens de connexion de convertisseurs statiques (MC1-MC4), qui sont reliés aux groupes de conditionnement d'air (ECS1-ECS4), à la barre bus essentielle (26).

3. Dispositif selon la revendication 1, dans lequel ce dispositif de stockage (30) comprend des batteries d'accumulateurs, des supercondensateurs, ou des accumulateurs cinétiques.

4. Dispositif selon la revendication 1, dans lequel le dispositif de stockage (30) comprend deux sous-systèmes distincts : un pour le +270 VDC et un pour le -270 VDC.

5. Dispositif selon la revendication 1, dans lequel le dispositif de stockage (30) comprend deux sous-ensembles (SD1, SD2) et deux convertisseurs statiques DC/DC (SC1, SC2).

6. Dispositif selon la revendication 1, dans lequel le dispositif de stockage (30) comprend une fonction de filtrage actif.

7. Dispositif selon l'une quelconque des revendications précédentes, dans lequel l'aéronef est un avion.

8. Procédé de génération électrique à bord d'un aéronef comprenant plusieurs générateurs (GEN1-GEN4) alimentant chacun une barre bus de distribution électrique triphasée (10, 11, 12, 13), des barres bus haute tension continu (15, 16, 17, 18) reliée chacune à l'une des barres bus de distribution électrique triphasée par l'intermédiaire d'une unité de redressement (ATRu1-ATRu4), plusieurs groupes de conditionnement d'air (ECS1-ECS4) ayant une arrivée d'air extérieure reliés chacun à un convertisseur statique (MC1-MC4), une barre bus haute tension continu essentielle (26) reliée à plusieurs charges (25), **caractérisé en ce qu'**il comprend les étapes suivantes :
- en fonctionnement normal, on alimente chaque groupe de conditionnement d'air (ECS1-ECS4) en haute tension continue en le connectant à l'une des barres bus haute tension continu (15, 16, 17, 18) au travers d'un convertisseur statique (MC1-MC4) utilisé en onduleur,
- en fonctionnement secours, on utilise chaque groupe de conditionnement d'air (ECS1-ECS4) en générateur de secours en le reliant à la barre bus essentielle (26) au travers d'un convertisseur statique (MC1-MC4) utilisé en redresseur,
- pendant les périodes transitoires entre le fonctionnement normal et le fonctionnement secours et lors de l'atterrissage de l'aéronef, on assure la fourniture d'électricité à l'aide d'un dispositif de stockage (30) relié à la barre bus essentielle (26).

9. Procédé selon la revendication 8, dans lequel en fonctionnement normal on alimente les groupes de conditionnement d'air via les convertisseurs statiques (MC1-MC4) utilisés en onduleurs, et dans lequel en fonctionnement secours on utilise les groupes de conditionnement d'air pour alimenter une barre bus essentielle, sur laquelle sont connectées des charges essentielles de l'aéronef et le dispositif de stockage, via les convertisseurs statiques (MC1-MC4) utilisés en redresseurs.

10. Aéronef comportant un dispositif selon l'une quelconque des revendications 1 à 7.

## Claims

1. An electric generation device onboard an aircraft comprising several generators (GEN1-GEN4), each powering a three-phase electric distribution bus bar (10, 11, 12, 13), high DC voltage bus bars (15, 16, 17, 18), each connected to one of the three-phase electric distribution bus bars via a rectification unit (ATRu1-ATRu4), several air conditioning units (ECS1-ECS4) having an outdoor air intake each connected to a static converter (MC1-MC4), an essential high DC voltage bus bar (26) connected to several loads (25), **characterized in that** it comprises means for connecting air conditioning units (ECS1-ECS4) allowing connection of each of them:
- during normal operation, to one of the high DC voltage bus bars (15, 16, 17, 18) through a static converter (MC1-MC4) used as an inverter, or
- during emergency operation, to the essential bus bar (26) through a static converter (MC1-MC4) used as a rectifier,
and a device for storing electricity (30) connected to the essential high DC voltage bus bar (26).

2. The device according to claim 1, which comprises the essential high DC voltage bus bar (26) on which are connected essential loads (25) of the aircraft and the storage device (30), and means for connecting static converters (MC1-MC4), which are connected to the air conditioning units (ECS1-ECS4), to the essential bus bar (26).

3. The device according to claim 1, wherein this storage device (30) comprises batteries of accumulators, supercapacitors, or kinetic accumulators.

4. The device according to claim 1, wherein the storage device (30) comprises two distinct subsystems: one for +270 VDC and one for -270 VDC.

5. The device according to claim 1, wherein the storage device (30) comprises two subassemblies (SD1, SD2) and two static DC/DC converters (SC1, SC2).

6. The device according to claim 1, wherein the storage device (30) comprises an active filtering function.

7. The device according to any of the preceding claims, wherein the aircraft is an airplane.

8. An electric generation method onboard an aircraft comprising several generators (GEN1-GEN4), each powering a three-phase electric distribution bus bar (10, 11, 12, 13), high DC voltage bus bars (15, 16, 17, 18), each connected to one of the three-phrase electric distribution bus bars via a rectifying unit (ATRu1-ATRu4), several air conditioning units (ECS1-ECS4) having an outdoor air intake each connected to a static converter (MC1-MC4), and a essential high DC voltage bus bar (26) connected to several loads (25), **characterized in that** it comprises the following steps:
- during normal operation, each air conditioning unit (ECS1-ECS4) is supplied with a high DC voltage by connecting it to one of the high DC voltage bus bars (15, 16, 17, 18) through a static converter (MC1-MC4), used as an inverter,
- during emergency operation, each air conditioning unit (ECS1-ECS4) is used as an emergency generator by connecting it to the essential bus bar (26) through a static converter (MC1-MC4) used as a rectifier,
- during transient periods between normal operation and emergency operation, and during the landing of the aircraft, supply of electricity is ensured by means of a storage device (30) connected to the essential bus bar (26).

9. The method according to claim 8, wherein, during normal operation, the air conditioning units are powered via the static converters (MC1-MC4) used as inverters, and wherein in emergency operation, the air conditioning units are used for powering an essential bus bar, on which are connected essential loads of the aircraft and the storage device, via the static converters (MC1-MC4) used as rectifiers.

10. An aircraft including a device according to any of claims 1 to 7.

## Patentansprüche

1. Vorrichtung zur Stromversorgung an Bord eines Luftfahrzeugs, umfassend mehrere Generatoren (GEN1-GEN4), die jeweils eine Drehstromverteilungsschiene (10, 11, 12, 13) versorgen, Sammelschienen hoher Gleichspannung (15, 16, 17, 18), die jeweils mit einer der Drehstromverteilungsschienen über eine Gleichrichtereinheit (ATRu1-ATRu4) verbunden sind, mehrere Luftkonditionierungsgruppen (ECS1-ECS4), die einen Lufteinlass von außen aufweisen, die jeweils mit einem statischen Umrichter (MC1-MC4) verbunden sind, eine Hauptsammelschiene hoher Gleichspannung (26), die mit mehreren Verbrauchern bzw. Geräten (25) verbunden ist,
**dadurch gekennzeichnet, dass** die Vorrichtung Verbindungsmittel für die Luftkonditionierungsgruppen (ECS1-ECS4), die eine Verbindung von jeder derselben:
- im Normalbetrieb - mit einer der Sammelschienen hoher Gleichspannung (15, 16, 17, 18) über einen als Wechselrichter verwendeten statischen Umrichter (MC1-MC4) oder
- im Notfallbetrieb - mit der Hauptsammelschiene (26) über einen als Gleichrichter verwendeten statischen Umrichter (MC1-MC4) ermöglichen,
sowie eine Stromspeichervorrichtung (30), die mit der Hauptsammelschiene hoher Gleichspannung (26) verbunden ist, umfasst.

2. Vorrichtung nach Anspruch 1, die die Hauptsammelschiene hoher Gleichspannung (26), mit der Hauptgeräte (25) des Luftfahrzeugs und die Speichervorrichtung (30) verbunden sind, und Mittel zur Verbindung von statischen Umrichtern (MC1-MC4), die mit Luftkonditionierungsgruppen (ECS1-ECS4) verbunden sind, mit der Hauptsammelschiene (26) umfasst.

3. Vorrichtung nach Anspruch 1, wobei die Speichervorrichtung (30) Akkumulatorbatterien, Superkondensatoren oder kinetische Akkumulatoren umfasst.

4. Vorrichtung nach Anspruch 1, wobei die Speichervorrichtung (30) zwei unterschiedliche Subsysteme umfasst: eines für +270 VDC und eines für -270 VDC.

5. Vorrichtung nach Anspruch 1, wobei die Speichervorrichtung (30) zwei Unteranordnungen (SD1, SD2) und zwei statische DC/DC-Umrichter (SC1, SC2) umfasst.

6. Vorrichtung nach Anspruch 1, wobei die Speichervorrichtung (30) eine Aktivfilterfunktion aufweist.

7. Vorrichtung nach einem der vorhergehenden Ansprüche, wobei das Luftfahrzeug ein Flugzeug ist.

8. Verfahren zur Stromversorgung an Bord eines Luftfahrzeugs, umfassend mehrere Generatoren (GEN1-GEN4), die jeweils eine Drehstromverteilungsschiene (10, 11, 12, 13) versorgen, Sammelschienen hoher Gleichspannung (15, 16, 17, 18), die jeweils mit einer der Drehstromverteilungsschienen über eine Gleichrichtereinheit (ATRu1-ATRu4) verbunden sind, mehrere Luftkonditionierungsgruppen (ECS1-ECS4), die einen Lufteinlass von außen aufweisen, die jeweils mit einem statischen Umrichter (MC1-MC4) verbunden sind, eine Hauptsamznelschiene hoher Gleichspannung (26), die mit mehreren Verbrauchern bzw. Geräten (25) verbunden ist,
**dadurch gekennzeichnet, dass** das Verfahren die folgenden Schritte umfasst: - im Normalbetrieb wird jede
Luftkonditionierungsgruppe (ECS1-ECS4) mit hoher Gleichspannung versorgt, indem sie mit einer der Sammelschienen hoher Gleichspannung (15, 16, 17, 18) über einen als Wechselrichter verwendeten statischen Umrichter (MC1-MC4) versorgt wird,
- im Notfallbetrieb wird jede Luftkonditionierungsgruppe (ECS1-ECS4) als Notfallgenerator verwendet, indem sie mit der Hauptsammelschiene (26) über einen als Gleichrichter verwendeten statischen Umrichter (MC1-MC4) verbunden wird,
- während der Übergangsperioden zwischen dem Normalbetrieb und dem Notfallbetrieb und während der Landung des Luftfahrzeugs wird die Stromlieferung mit Hilfe einer Speichervorrichtung (30), die mit der Hauptsammelschiene (26) verbunden ist, sichergestellt.

9. Verfahren nach Anspruch 8, wobei im Normalbetrieb die Luftkonditionierungsgruppen über die als Wechselrichter verwendeten statischen Umrichter (MC1-MC4) versorgt werden und wobei im Notfallbetrieb die Luftkonditionierungsgruppen zur Versorgung einer Hauptsammelschiene, an die die Hauptgeräte des Luftfahrzeugs und die Speichervorrichtung angeschlossen sind, über die als Gleichrichter verwendeten statischen Umrichter (MC1-MC4) verwendet werden.

10. Luftfahrzeug, das eine Vorrichtung nach einem der Ansprüche 1 bis 7 aufweist.
